# EUROPÄISCHE PATENTSCHRIFT

(11) **EP 2 326 969 B1**
(45) Veröffentlichungstag und Bekanntmachung des Hinweises auf die Patenterteilung: **02.11.2016**
(21) Anmeldenummer: 09778111.6
(22) Anmeldetag: 26.08.2009
(51) Int. Cl.: G01S 15/87, G01S 15/93, G01S 7/00

(54) **VERFAHREN UND ANORDNUNG ZUR STEUERUNG VON SENSOREN AN EINEM FAHRZEUG**
METHOD AND ARRANGEMENT FOR CONTROLLING SENSORS ON A VEHICLE
PROCÉDÉ ET DISPOSITIF DE COMMANDE DE CAPTEURS SUR UN VÉHICULE

(30) Priorität: 06.09.2008 DE 102008046171
(43) Veröffentlichungstag der Anmeldung: 01.06.2011
(73) Patentinhaber: Valeo Schalter und Sensoren GmbH, 74321 Bietigheim-Bissingen (DE)
(72) Erfinder: JUNG, Thomas, 74074 Heilbronn (DE); LILL, Anton, 74348 Lauffen a. N. (DE); KUPFERNAGEL, Uwe, 71665 Vaihingen a. E. (DE)
(86) Internationale Anmeldenummer: PCT/EP2009/006168
(87) Internationale Veröffentlichungsnummer: WO 2010/025864

(56) Entgegenhaltungen:
- DE-A1- 3 540 704
- DE-A1- 19 845 568
- US-A- 4 845 682
- US-A- 5 229 975
- US-A1- 2004 021 847
- US-A1- 2004 218 471

## Beschreibung

### Stand der Technik

Die Erfindung betrifft ein Verfahren und eine Anordnung zur Steuerung von Sensoren an einem Fahrzeug, zum Beispiel für ein ultraschallbasierendes Umfelderkennungssystem als Parkassistenz in einem Kraftfahrzeug, nach der Gattung des Hauptanspruchs.

Bei solchen ultraschallbasierenden Umfelderkennungssystemen werden mindestens ein Ultraschallsensor oder mehrere beispielsweise in der vorderen und/oder hinteren Stoßstange oder auch seitlich an einem Kraftfahrzeug verbaut. Jeder Ultraschallsensor sendet dabei ein Ultraschallsignal aus, welches von einem möglichen Objekt bzw. Hindernis reflektiert wird und von dem gleichen Ultraschallsensor und oder von weiteren Ultraschallsensoren empfangen und dann einer Signalauswertung zugeführt werden kann. Üblicherweise sind solche ultraschallbasierende Umfelderkennungssysteme mit Einzelverbindungen von einem Steuergerät zu jedem Sensor aufgebaut.

Mit einem solchen Steuergerät werden die Ultraschallsensoren angesteuert und die vom jeweiligen Ultraschallsensor gemessenen Abstände ausgewertet. Das Steuergerät steuert in der Regel außerdem einen Lautsprecher als Signalisierungsgerät an, oder gibt die Daten zur weiteren Auswertung über einen Bus an den Bordcomputer des Fahrzeugs weiter. Meist besitzt das Steuergerät auch weitere Funktionen wie beispielsweise einen Fehlerspeicher etc.

Beispielsweise ist es aus der DE 101 44 829 A1 bekannt, dass Ultraschallsensoren, die Bestandteil eines solchen Sensorsystems für ein Umfelderkennungssystem sind, über ein Bussystem mit einem zentralen Steuergerät in einem Fahrzeug kommunizieren. Hieraus ist ferner bekannt, dass in der Nähe der jeweiligen Sensoren, d.h. jeweils an der vorderen und an der hinteren Stoßstange dezentrale Steuereinheiten angebracht sind, die einerseits über das Bussystem mit dem zentralen Steuergerät und über Versorgungs- und Kommunikationsleitungen mit den Sensoren verbunden sind. In den dezentralen Steuereinheiten sind jeweils spezifische Daten für die im jeweiligen Bereich angeordneten Sensoren abgelegt und es werden eine Reihe von Funktionen hier ausgeübt, wie zum Beispiel Kommunikation mit den Sensoren, Spannungsversorgung, der Sensoren, Senden von Abstandsinformationen von den Sensoren über das Bussystem, Lesen und Verarbeiten von Aktivierungsinformationen sowie das Speichern von Codierdaten der Sensoren.

Weiterhin ist aus der DE 103 25 374 A1 auch noch bekannt, dass einer der verwendeten Sensoren als sogenannter Mastersensor ausgebildet ist, der die von den Sensoren erfassten Daten aufnimmt und geeignet weiterverarbeitet.

Des Weiteren ist aus der DE 35 40 704 A1 eine Einrichtung zur Abstandsmessung für Fahrzeuge mit einer Mehrzahl von Ultraschallsensoren bekannt, die zyklisch angesteuert werden. Um die Warnfunktion für den Fahrer zu verbessern, wird der Aktivierungszyklus der Sensoren in Abhängigkeit von den im vorherigen Messzyklus empfangenen Echosignalen variiert. Die Ansteuerung der Sensoren erfolgt dabei über ein zentrales Steuergerät.

Aus der US 4 845 682 A ist ein Verfahren zur Detektion von Objekten mittels eines Ultraschallsensorsystems bekannt, wobei ein Objekt in zwei aufeinanderfolgenden Messzyklen erkannt werden soll. Um Interferenzen mit vorausgegangenen Signalen zu vermeiden, wird dabei vorgeschlagen, die Abstände zwischen aufeinanderfolgenden Messungen durch einen Zufallsgenerator zur variieren. Die Aktivierung des Ultraschallsystems erfolgt dabei über ein zentrales Steuergerät.

Aus der US 2004/218471 A1 sind ebenfalls ein Verfahren und eine Vorrichtung zur Erfassung von Objekten zur Verwendung als Einparkhilfe in einem Kraftfahrzeug bekannt, die eine Anzahl von Abstandssensoren über einen Mikrocontroller ansteuert. Der Mikrocontroller beaufschlagt die Sensoren mit einer zeitlich veränderlichen Kennung.

Bei diesen bekannten Systemen mit Einzelverbindungen oder mit einem Bussystem bestimmt dabei das zentrale Steuergerät oder ein Mastersensor den Messablauf. Durch Triggerimpulse bzw. Triggertelegramme bestimmt das Steuergerät, welcher Sensor welche Aktion durchführt. Beispiele für solche Aktionen sind: Erzeugen eines Ultraschallimpulses oder das Erfassen von eingehenden Ultraschallimpulsen. Üblicherweise definiert das System solche Triggerimpulse bzw. Triggerdaten für mehrere Sensoren synchron, um auch die Messaktionen synchron auszuführen. Eine Verzögerung zwischen Trigger und Aktion kann jedoch auch vorgesehen bzw. technisch bedingt sein.

Ein Großteil der Systemkosten, insbesondere bei der Verwendung der Sensoren in Parkhilfesystemen, entfällt daher auf die Steuerelektronik. Es kann daher als eine Aufgabe der Erfindung angesehen werden, dass ein kostengünstiges System gefunden wird, bei dem der technische Aufwand und die Kosten einer Steuerelektronik minimierbar sind.

### Darstellung der Erfindung

Die Erfindung geht von einem Verfahren zur Steuerung von Sensoren, insbesondere für ultraschallbasierende Abstandserkennungssysteme in einem Fahrzeug aus, bei dem die Sensoren mit einem Signalgeber für vorgegebene Abstandsdetektionen kommunizieren. In vorteilhafter Weise wird gemäß der Erfindung jeweils ein Sensor aus einer Mehrzahl von Sensoren durch ein von einem Zufallsgenerator getriggertes Signal zur Generierung eines Sendesignals veranlasst und aus den von einem beabstandeten Objekt reflektierten Empfangssignal der erfasste Abstand wird direkt zur Ansteuerung der Signalisierungseinrichtung verwendet. Weiterhin ist es vorteilhaft, wenn die von dem Zufallsgenerator in zufälligen zeitlichen Abständen getriggerten Sendesignale im Sensor eine Signalerzeugung für eine Sinusschwingung mit vorgegebener Frequenz, Periodenzahl und Amplitude generieren. Erfindungsgemäß wird das von einem beabstandeten Objekt reflektierte Empfangssignal mit einem vorgegebenen Schwellwert verglichen und in einem logischen Filter berechnet, ob es sich um eine direkte Reflexion, um ein Sendesignal von einem benachbarten Sensor, ein Störsignal oder um eine Mehrfachreflexion handelt.

Zur Definition eines auswertbaren Empfangssignals wird das Empfangssignal in einer vorgegebenen Zeitspanne mit einer vorgegebenen Häufigkeit als solches von einem beabstandeten Objekt reflektiertes Empfangssignal erkannt. Der aus dem Empfangssignal ermittelte Abstand zu einem beabstandeten Objekt wird dann auf einfache Weise in eine zum Abstand korrespondierende Signalart des Signalgebers umgewandelt.

Mit einem Zähler kann in vorteilhafter Weise der Zeitraum von einer Signalisierung bis zur nächsten erfasst werden und bei geringen Zeiträumen kann eine Dauersignalisierung ausgegeben werden. Der Zähler läuft dazu nach dem Start durch eine Signalisierung eines Sensors los und startet jeweils neu, falls von einem anderen Sensor ein Signalisierung veranlasst wird.

Bei einer erfindungsgemäßen Anordnung zur Durchführung des zuvor beschriebenen Verfahrens sind bei einem Abstandserkennungssystem in einem Fahrzeug Ultraschallsensoren als Sensoren jeweils von einem Zufallsgenerator getriggert und es ist ein Generator zu Erzeugung einer Sinusschwingung vorhanden, die über einen Verstärker auf eine Membran des Ultraschallsensor führbar ist. Zur Verstärkung des Empfangssignals der Membran aufgrund des von einem Objekt reflektierten Signals ist ein Signalverstärker vorhanden und anschließend ist ein Analog-Digital-Wandler vorhanden, zum Vergleich mit einem Schwellwert und zur Erzeugung eines digitalen Signals. Weiterhin ist ein logisches Filter vorgesehen, in dem berechenbar ist, ob es sich um ein reflektiertes Signal handelt und es ist eine Auswerteeinheit vorhanden, zur Umwandlung des erfassten Abstandes des beabstandeten Objekts in eine Signalisierungsart eines Signalgebers.

Im Detail wird die erfindungsgemäße Anordnung mit einer elektronischen Schaltung realisiert, die eine Open-Kollektor-Schaltung aufweist und die angesteuert durch die Signalisierung der Auswerteeinheit eine Signalleitung für den Signalgeber auf Masse zieht. Der Signalgeber ist vorzugsweise ein Tongeber oder es kann auch auf die Signalleitung ein Tonsignal mit einer hörbaren Frequenz aufmodulierbar werden, wobei dann die Signalleitung direkt an einen vorhanden Lautsprecher angeschlossen werden kann.

Die erfindungsgemäße Anordnung mit dem Abstandserkennungssystem kann in vorteilhafter Weise in einem Fahrzeug in dem vorderen und/oder hinteren Stoßfänger angebracht werden und mit mindestens einem Dreileiterkabel können alle Verbindungen von den Sensoren zum dem Signalgeber realisiert werden. Es ist hierbei auch denkbar, zum Beispiel die Initialisierung der hinteren Sensoren beim Einlegen des Rückwärtsgangs beim Fahrzeug vorzunehmen.

Auf jeden Fall ist es mit der Erfindung erreicht, dass weitere zentrale oder dezentrale elektronische Steuerungsschaltungen überflüssig werden, da alle Auswerte- und Signalisierungsaufgaben direkt mit den Sensoren und dem Signalgeber erledigt werden können. Somit kommt beispielsweise ein Parkhilfesystem ganz ohne ein Steuergerät aus, da die Sensoren keine externe Ansteuerung benötigen, sich selbst synchronisieren und direkt einen im Fahrzeug vorhandenen Tongeber ansteuern können. Diese führt zu sehr geringen Systemkosten, da durch das weggefallene Steuergerät auch keine Software notwendig ist und keine extra Bauteile notwendig sind. Daher kann eine einfache platzsparende Systemarchitektur mit einfacher Verkabelung und frei kaskadierbaren Sensoren in beliebiger Anzahl realisiert werden.

### Kurze Beschreibung der Zeichnung

Ein Ausführungsbeispiel der Erfindung wird anhand der Figuren der Zeichnung erläutert. Es zeigen:
Figur 1 zeigt ein schematisches Bild eines Fahrzeugs mit Sensoren, insbesondere Ultraschallsensoren an einem hinteren Stoßfänger,
Figur 2 beispielhaft einen Ultraschallsensor mit einer erfindungsgemäßen Beschaltung und
Figuren 3, 4 und 5 Signalverlaufe der Taktsignale der Sensoren über der Zeit.

### Weg zur Ausführung der Erfindung

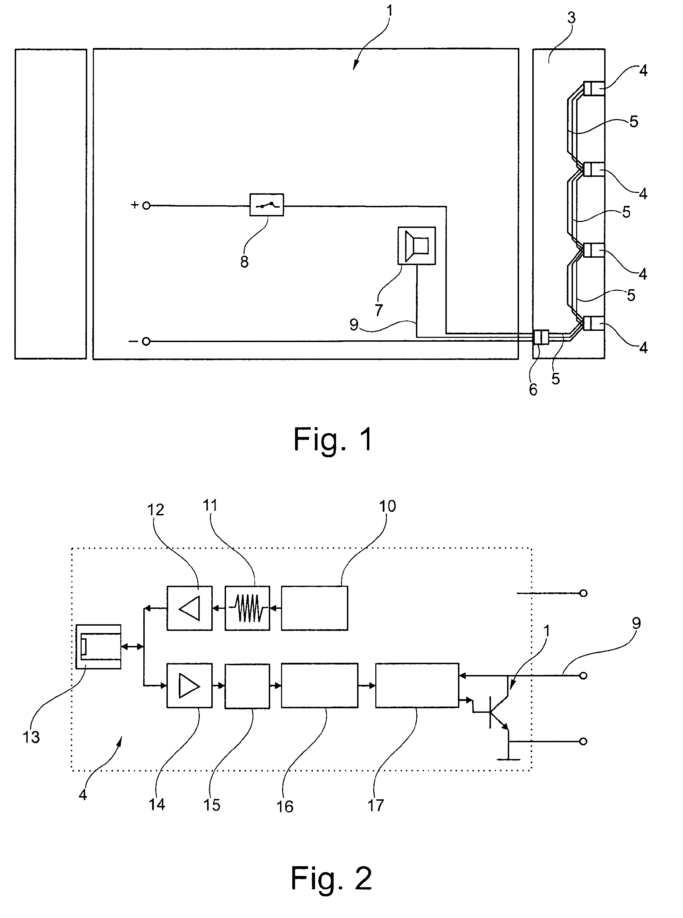

Aus Figur 1 ist schematisch ein Fahrzeug 1 mit einem vorderen Stoßfänger 2 und einem hinteren Stoßfänger 3 gezeigt. Im hinteren Stoßfänger 3 sind hier beispielhaft Ultraschallsensoren als Sensoren 4 für ein ultraschallbasierendes Parkhilfesystem gezeigt. Die Sensoren 4 sind hier über ein Dreileiterkabel 5 miteinander und mit einem Streckverbinder 6 verbunden. Über den Steckverbinder 6 wird ein Tongeber 7 angeschlossen und über einen Schalter 8, beispielsweise betätigt durch Einlegen des Rückwärtsgangs im Fahrzeug 1, wird eine Versorgungsspannung dem Steckverbinder 6 und damit den Sensoren 4 zugeführt. Alle Sensoren 4 sind damit parallel geschaltet und jeder der Sensoren 4 kann damit über eine Signalleitung 9 den Tongeber 7 ansteuern. Das gezeigte Dreileiter-Kabel 5 ist hier nur ein Beispiel, da auch eine Vielzahl anderer Kabelbäume ohne Einschränkungen hinsichtlich der Funktion realisierbar sind.

In Figur 2 ist ein Ausführungsbeispiel einer elektronischen Beschaltung von einem der Sensoren 4 gezeigt, anhand dessen die erfindungsgemäße Funktion der Anordnung erläutert wird. In einem Zufallsgenerator 10 wird in zufälligen zeitlichen Abständen ein Signal bzw. ein Trigger generiert. Getriggert durch dieses Signal wird in einem Generator 11 zur Signalerzeugung eine Sinusschwingung mit bestimmter Frequenz, Periodenanzahl und Amplitude erzeugt, die durch einen Transformator bzw. Verstärker 12 verstärkt wird. Eine Membran 13 des als Ultraschallsensor ausgeführten Sensors 4 sendet dann ein Ultraschallsignal zur Detektion eines hier nicht gezeigten beabstandeten Objekts aus.

Wird das ausgesendete Ultraschallsignal von dem Objekt, in der Regel ein Hindernis zum Beispiel bei einem Einparkvorgang, reflektiert, kann das Echo wieder von der Membran 13 empfangen werden. Das so gewonnene Signal wird in einem Signalverstärker 14 verstärkt und anschließend durch Vergleich mit einem Schwellwert in einem A/D-Wandler 15 in ein digitales Signal umgewandelt. In einem logischen Filter 16 wird dann berechnet, ob es sich um ein direktes Echo handelt oder um ein Ultraschallsignal von einem benachbarten Sensor 4 am Stoßfänger 3, um Störschall oder um ebenfalls nicht auswertbare Mehrfachreflexionen.

Zur weiteren Auswertung muss ein Echo zu einer bestimmten Zeit mit einer bestimmten Häufigkeit erkannt werden, damit es tatsächlich als Hindernis erkannt wird. In einem Timer 17 als Umrechnungseinheit wird der so gemessene Abstand zu dem Objekt in einen Takt zur Ansteuerung des Tongebers 7 im Fahrzeug 1 umgerechnet.

Um diese Ansteuerung zu realisieren, wird die Signalleitung 9 bei dem hier dargestellten Ausführungsbeispiel mit einer sogenannten Open-Kollektor-Transistorschaltung 18 nach Masse gezogen und somit auf Low (Lowsignal oder Lowimpuls) gesetzt. Es sind hier aber auch andere Schaltungen einsetzbar, mit denen beispielsweise die Signalleitung 9 auf die Versorgungsspannung gezogen werden könnte.

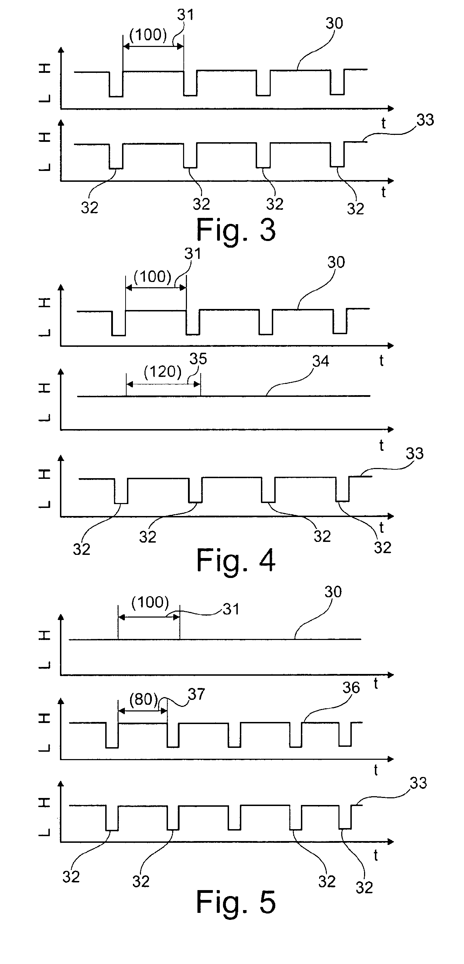

Wie zuvor erwähnt, wird im Timer 17 der gemessene Abstand in einen Takt zur Ansteuerung des Tongebers 7 im Fahrzeug umgerechnet, was anhand von Figur 3, 4 und 5 näher erläutert wird. Dabei ist in der Figur 3 der Verlauf eines Taktsignals 30 bei einem Sensor 4 über der Zeit t gezeigt, dessen Taktperiode vom gemessenen Abstand abhängig ist, das heißt ein kleinerer Abstand führt zu einem schnelleren Takt und zu kürzeren Pausenzeiten 31 (hier der Wert 100) zwischen Ansteuerungsimpulsen 32 des Pegels 33 auf der Signalleitung 9 (hier gezogen auf Low).

In der Umsetzung wird die jeweilige Pausenzeit 31 durch den Timer 17 realisiert. Abhängig von der gewünschten Pausenzeit 31 zählt der Timer bis zu einem bestimmten Wert. Nach erreichen des Wertes wird über den Open Kollektor die Signalleitung 9 auf Low gezogen (Ansteuerungsimpuls 32) und somit der Tongeber 7 (Figur 1) angesteuert. Durch ein solches Lowsignal wird der Timer 17 zurückgesetzt und fängt dann erneut an bis zum berechneten Wert zu zählen. Dabei spielt es keine Rolle wodurch der Pegel 33 auf der Signalleitung 9 auf Low gezogen wird, das heißt, auch die anderen Sensoren 4, die mit derselben Signalleitung 9 verbunden sind, können den Timer 17 zurücksetzen.

Aus der Figur 4 ist zu entnehmen, dass zusätzlich zu Sensor 4 mit dem Taktverlauf 30 und der gewünschten Pausenzeit 31 auch ein Sensor 4 mit einem Taktsignal 34 und einem gemessenen längeren Abstand und daher mit einer längeren Pausenzeit 35 (hier der Wert 120) vorhanden ist. In diesem Fall zieht nur der Sensor 4 mit dem Taktsignal 30 den Pegel 33 auf der Signalleitung 9 mit den Ansteuerungsimpulsen 32 auf Low.

Hat jedoch nach der Figur 5 ein anderer Sensor 4 mit einem Taktsignal 36 einen kleineren Abstand als beim Taktsignal 30 gemessen, so ist dessen Pausenzeit 37 (hier der Wert 80) kürzer und erreicht somit schneller den Zählerwert, zieht damit die Signalleitung 9 früher auf Low und setzt somit alle Zähler an der Signalleitung 9 zurück. Dann fangen alle gleichzeitig wieder an bis zu ihrem jeweiligen Zählerendwert zu zählen. Der Sensor 4, der als erster den Zählerendwert erreicht hat, also derjenige mit dem kürzesten gemessenen Abstand, zieht dann wieder die Signalleitung 9 auf Low und setzt alle Zähler, auch den eigenen, zurück. Der Zyklus beginnt dann von vorne. Dadurch sind alle Sensoren 4 synchronisiert. Es können somit theoretisch beliebig viele Sensoren 4 parallel geschaltet werden.

Ein besonders kostengünstiges System kann schon mit zwei Sensoren 4 realisiert werden, da außer durch die Sensoren 4 und dem Dreileiterkabel 5 keine weiteren Kosten anfallen.

Am Ausgang des Sensors 4 auf der Signalleitung 9 könnte alternativ auch jeweils eine Schwingung mit einer hörbaren Frequenz aufmoduliert werden, um direkt einen Lautsprecher ohne Elektronik ansteuern zu können. Im anderen Fall könnte ein bereits vorhandener Tongeber 7 verwendet werden, der evtl. schon im Fahrzeug 1 vorhanden ist, um z. B. ein vergessenes Licht bei geöffneter Türe anzuzeigen. Die erfindungsgemäße Anordnung könnte darüber hinaus auch im vorderen Stoßfänger 2 verbaut werden.

Alternativ zu der Anordnung des Zufallsgenerators 10 könnte auch ein anderes fest vorgegebenes Muster verwendet werden, was eventuell aber die Störanfälligkeit erhöhen würde. Anstatt die Signalleitung 9, wie beschrieben, nach Masse zu ziehen (Lowsignal) könnte auch eine Spannung oder ein Strom proportional zum Abstand ausgegeben werden. Allerdings wäre dann ein weiteres kleines elektronisches Gerät zum Ansteuern des Tongebers notwendig.

## Patentansprüche

1. Verfahren zur Steuerung von Sensoren (4), insbesondere für ultraschallbasierende Abstandserkennungssysteme in einem Fahrzeug (1), bei dem die Sensoren (4) mit einer Signalisierungseinrichtung für vorgegebene Abstandsdetektionen kommunizieren, **dadurch gekennzeichnet, dass** jeder Sensor (4) aus der Mehrzahl von Sensoren einen Zufallsgenerator (10) umfasst und jeweils durch ein von dem Zufallsgenerator (10) getriggertes Signal zur Generierung eines Sendesignals veranlasst wird und aus dem von einem beabstandeten Objekt reflektierten Empfangssignal der erfasste Abstand direkt zur Ansteuerung der Signalisierungseinrichtung verwendet wird und dass das von einem beabstandeten Objekt reflektierte Empfangssignal mit einem vorgegebenen Schwellwert verglichen wird und in einem logischen Filter (16) berechnet wird, ob es sich um eine direkte Reflexion, um ein Sendesignal von einem benachbarten Sensor, ein Störsignal oder um eine Mehrfachreflexion handelt.

2. Verfahren nach Anspruch 1, **dadurch gekennzeichnet, dass** der gemessene Abstand in einen Takt zur Ansteuerung der Signalisierungseinrichtung im Fahrzeug umgerechnet, wobei ein kleinerer Abstand zu einem schnelleren Takt und zu kürzeren Pausenzeiten (31) und ein längerer Abstand führt zu einem langsameren Takt und zu längeren Pausenzeiten (31) zwischen Ansteuerungsimpulsen (32) eines Pegels (33) auf einer Signalleitung (9) zwischen den Sensoren (4) und der Signalisierungseinrichtung führt.

3. Verfahren nach Anspruch 1 oder 2, **dadurch gekennzeichnet, dass** die von dem Zufallsgenerator (10) oder dem vorgegebenen Impulsmuster in zufälligen zeitlichen Abständen getriggerten Sendesignale im Sensor (4) eine Signalerzeugung für eine Sinusschwingung mit vorgegebener Frequenz, Periodenzahl und Amplitude generieren.

4. Verfahren nach einem der vorhergehenden Ansprüche, **dadurch gekennzeichnet, dass** zur Definition als auswertbares Empfangssignal das Empfangssignal in einer vorgegebenen Zeitspanne mit einer vorgegebenen Häufigkeit als solches von einem beabstandeten Objekt reflektiertes Empfangssignal erkannt wird.

5. Verfahren nach einem der vorhergehenden Ansprüche, **dadurch gekennzeichnet, dass** der aus dem Empfangssignal ermittelte Abstand zu einem beabstandeten Objekt in eine zum Abstand korrespondierende Signalart der Signalisierungseinrichtung umgewandelt wird.

6. Verfahren nach einem der vorhergehenden Ansprüche, **dadurch gekennzeichnet, dass** der Timer (17) durch eine Signalisierung eines Sensors (4) zurückgesetzt wird und jeweils erneut anfängt bis zum berechneten Wert zu zählen, wobei jeder der Sensoren (4), die mit der Signalleitung (9) verbunden sind, den Timer (17) zurücksetzen können.

7. Anordnung zur Durchführung eines Verfahrens nach einem der vorhergehenden Ansprüche, **dadurch gekennzeichnet, dass** bei einem Abstandserkennungssystem in einem Fahrzeug (1) Ultraschallsensoren als Sensoren (4) jeweils einen Zufallsgenerator (10) umfassen und von diesem getriggert sind, ein Generator (11) zur Erzeugung einer Sinusschwingung vorhanden ist, die über einen Verstärker (12) auf eine Membran (13) des Ultraschallsensors führbar ist, dass zur Verstärkung des Empfangssignals der Membran (13) aufgrund des von einem Objekt reflektierten Signals ein Signalverstärker (14) vorhanden ist, dass anschließend ein Analog-Digital-Wandler (15) vorhanden ist zum Vergleich mit einem Schwellwert und zur Erzeugung eines digitalen Signals, dass ein logisches Filter (16) vorhanden ist, in dem berechenbar ist, ob es sich um ein reflektiertes Signal und ob es sich um eine direkte Reflexion, um ein Sendesignal von einem benachbarten Sensor, ein Störsignal oder um eine Mehrfachreflexion handelt, und dass der Timer (17) zur Umwandlung des erfassten Abstandes des beabstandeten Objekts in eine Signalisierungsart eines Signalgebers vorhanden ist.

8. Anordnung nach Anspruch 7 **dadurch gekennzeichnet, dass** eine Open-Kollektor-Transistorschaltung (18) oder ähnliche Transistorschaltung vorhanden ist, die angesteuert durch die Signalisierung des Timers (17) eine Signalleitung (9) für die Signalisierungseinrichtung auf Masse oder einen vorgegebenen Pegel zieht.

9. Anordnung nach Anspruch 7 oder 8, **dadurch gekennzeichnet, dass** der Signalgeber ein Tongeber (7) ist.

10. Anordnung nach Anspruch 7 oder 8, **dadurch gekennzeichnet, dass** auf die Signalleitung (9) ein Tonsignal mit einer hörbaren Frequenz aufmodulierbar ist und die Signalleitung (9) direkt an einen vorhanden Lautsprecher angeschlossen ist.

11. Anordnung nach einem der Ansprüche 7 bis 10, **dadurch gekennzeichnet, dass** das Abstandserkennungssysteme in einem Fahrzeug in dem vorderen und/oder hinteren Stoßfänger (3) angebracht ist und mit mindestens einem Dreileiterkabel (5) alle Verbindungen von den Sensoren (4) zum dem Signalgeber realisiert sind.

## Claims

1. Method for controlling sensors (4), in particular for ultrasonic distance-detection systems in a vehicle (1), in which the sensors (4) communicate with a signalling device for predefined distance detection operations, **characterized in that** each sensor (4) from the plurality of sensors comprises a random generator (10) and in each case is caused by a signal which is triggered by the random generator (10) to generate a transmission signal, and on the basis of the reception signal reflected by an object at a distance the sensed distance is used directly to actuate the signalling device and **in that** the reception signal which is reflected by an object at a distance is compared with a predefined threshold value, and in a logic filter (16) it is calculated whether the reflection is a direct reflection, a transmission signal from an adjacent sensor, an interference signal or a multiple reflection.

2. Method according to Claim 1, **characterized in that** the measured distance is converted into a clock pulse for actuating the signalling device in the vehicle, wherein a shorter distance gives rise to a faster clock pulse and to shorter interpulse periods (31), and a larger distance gives rise to a slower clock pulse and to longer interpulse periods (31) between the actuation pulses (32) of a level (33) on a signal line (9) between the sensors (4) and the signalling device.

3. Method according to Claim 1 or 2, **characterized in that** the transmission signals which are triggered by the random generator (10) or the predefined pulse pattern at random time intervals cause signals for a sinusoidal oscillation with a predefined frequency, period number and amplitude to be generated in the sensor (4).

4. Method according to one of the preceding claims, **characterized in that**, for the purpose of definition of a reception signal which can be evaluated, the reception signal is detected in a predefined time period with a predefined frequency as a reception signal which is reflected by an object at a distance.

5. Method according to one of the preceding claims, **characterized in that** the distance from an object at a distance, which is determined from the reception signal, is converted into a type of signal, corresponding to the distance, of the signalling device.

6. Method according to one of the preceding claims, **characterized in that** the timer (17) is reset by a signalling operation of a sensor (4), and in each case starts to count again up to the calculated value, wherein each of the sensors (4) which are connected to the signalling line (9) can reset the timer (17).

7. Arrangement for carrying out a method according to one of the preceding claims, **characterized in that**, in a distance-detection system in a vehicle (1), ultrasonic sensors as sensors (4) each comprise a random generator (10) and are triggered thereby, and there is a generator (11) for generating a sinusoidal oscillation which can be conducted via an amplifier (12) to a diaphragm (13) of the ultrasonic sensor, **in that**, in order to amplify the reception signal of the diaphragm (13) on the basis of the signal reflected by an object, there is a signal amplifier (14), **in that** there is then an analogue/digital converter (15) for the comparison with a threshold value and for generating a digital signal, **in that** there is a logic filter (16) in which it is possible to calculate whether the signal is a reflected signal and whether it is a direct reflection, a transmission signal from an adjacent sensor, an interference signal or a multiple reflection, and **in that** there is the timer (17) for converting the sensed distance from the object at a distance into a type of signalling operation of a signal generator.

8. Arrangement according to Claim 7, **characterized in that** there is an open-collector transistor circuit (18) or a similar transistor circuit which, actuated by the signalling operation of the timer (17), draws a signal line (9) for the signalling device to earth or to a predefined level.

9. Arrangement according to Claim 7 or 8, **characterized in that** the signal generator is a sound generator (7).

10. Arrangement according to Claim 7 or 8, **characterized in that** a sound signal with an audible frequency can be modulated onto the signal line (9), and the signal line (9) is connected directly to a loudspeaker which is present.

11. Arrangement according to one of Claims 7 to 10, **characterized in that** the distance-detection system is mounted in a vehicle, in the front and/or rear bumper (3), and all the connections from the sensors (4) to the signal generator are implemented by means of at least one three-conductor cable (5).

## Revendications

1. Procédé de commande de capteurs (4), en particulier pour des systèmes de détection de distance à ultrasons dans un véhicule (1), dans lequel les capteurs (4) communiquent avec un dispositif de signalisation pour des détections de distance prédéfinies, **caractérisé en ce que** chaque capteur (4), parmi la pluralité de capteurs, comprend un générateur aléatoire (10) et est respectivement activé par un signal déclenché par le générateur aléatoire (10) pour générer un signal d'émission et **en ce que** la distance détectée à partir du signal de réception réfléchi par un objet distant est directement utilisée pour commander le dispositif de signalisation et **en ce que** le signal de réception réfléchi par l'objet distant est comparé à une valeur de seuil prédéfinie et **en ce qu'**il est calculé dans un filtre logique (16) s'il s'agit d'une réflexion directe, d'un signal d'émission d'un capteur voisin, d'un signal parasite ou d'une réflexion multiple.

2. Procédé selon la revendication 1, **caractérisé en ce que** la distance mesurée est convertie en une horloge destinée à commander le dispositif de signalisation dans le véhicule, dans lequel une plus faible distance conduit à une horloge plus rapide et à des temps de pause (31) plus courts et une plus grande distance conduit à une horloge plus lente et à des temps de pause (31) plus longs entre des impulsions de commande (32) d'un niveau (33) sur une ligne de signal (9) entre les capteurs (4) et le dispositif de signalisation.

3. Procédé selon la revendication 1 ou 2, **caractérisé en ce que** les signaux d'émission déclenchés à des intervalles de temps aléatoires par le générateur aléatoire (10) ou par le motif d'impulsions prédéfini dans le capteur (4) génèrent une production de signal destinée à une oscillation sinusoïdale ayant une fréquence, un nombre de périodes et une amplitude prédéfinis.

4. Procédé selon l'une quelconque des revendications précédentes, **caractérisé en ce que**, pour être défini en tant que signal de réception pouvant être analysé, le signal de réception est détecté dans un intervalle de temps prédéfini avec une fréquence prédéfinie comme étant le signal de réception qui est réfléchi par un objet distant.

5. Procédé selon l'une quelconque des revendications précédentes, **caractérisé en ce que** la distance d'un objet distant déterminée à partir du signal de réception est convertie en un type de signal du dispositif de signalisation, qui correspond à ladite distance.

6. Procédé selon l'une quelconque des revendications précédentes, **caractérisé en ce que** la temporisation (17) est réinitialisée par une signalisation d'un capteur (4) et est relancée jusqu'à ce qu'une valeur calculée soit comptée, dans lequel chacun des capteurs (4) qui sont connectés à la ligne de signal (9) peut réinitialiser la temporisation (17).

7. Dispositif destiné à mettre en oeuvre un procédé selon l'une quelconque des revendications précédentes, **caractérisé en ce que**, dans le cas d'un système de détection de distance présent dans un véhicule (1), les capteurs à ultrasons comprennent respectivement en tant que capteurs (4) un générateur aléatoire (10) et sont déclenchés par celui-ci, **en ce qu'**il est prévu un générateur (11) pour produire une oscillation sinusoïdale qui peut être appliquée par l'intermédiaire d'un amplificateur (12) à une membrane (13) du capteur à ultrasons, **en ce qu'**un amplificateur de signal (14) est prévu pour amplifier le signal de réception de la membrane (13) sur la base du signal réfléchi par un objet, **en ce qu'**un convertisseur analogique-numérique (15) est ensuite prévu pour effectuer une comparaison à une valeur de seuil et pour produire un signal numérique, **en ce qu'**il est prévu un filtre logique (16) dans lequel il est possible de calculer s'il s'agit d'un signal réfléchi et s'il s'agit d'une réflexion directe, d'un signal d'émission provenant d'un capteur voisin, d'un signal parasite ou d'une réflexion multiples, et **en ce que** la temporisation (17) est prévue pour convertir la distance détectée de l'objet distant en un type de signalisation d'un générateur de signal.

8. Dispositif selon la revendication 7, **caractérisé en ce qu'**il est prévu un circuit à transistor à collecteur ouvert (18) ou un circuit à transistor de ce type, qui fait passer à la masse ou à un niveau prédéfini de manière commandée par la signalisation de la temporisation (17), une ligne de signal (9) destinée au dispositif de signalisation.

9. Dispositif selon la revendication 7 ou 8, **caractérisé en ce que** le générateur de signal est un générateur de signaux sonores (7).

10. Dispositif selon la revendication 7 ou 8, **caractérisé en ce qu'**un signal sonore ayant une fréquence audible peut être surmodulé sur la ligne de signal (9) et **en ce que** la ligne de signal (9) est directement raccordée à un haut-parleur prévu.

11. Dispositif selon l'une quelconque des revendications 7 à 10, **caractérisé en ce que** le système de détection de distance est installé dans un véhicule dans le pare-chocs (3) avant et/ou arrière et **en ce que** toutes les connexions des capteurs (4) au générateur de signal sont réalisées à l'aide d'au moins un câble à trois conducteurs (5).
